# EUROPEAN PATENT APPLICATION

(11) **EP 1 653 759 A1**
(43) Date of publication of application: **03.05.2006**
(21) Application number: 04025756.0
(22) Date of filing: 29.10.2004
(51) Int. Cl.: H04Q 7/38, G08B 13/14

(54) **Locking mechanism for wireless electronic equipment**

(71) Applicant: Sony Ericsson Mobile Communications AB, 221 88 Lund (SE)
(72) Inventor: Floberg, Mikael, 260 33 Paarp (SE)
(74) Representative: Körber, Martin Hans

(57) **Abstract**

The present invention provides an electronic system (1) for wireless communication with a mobile radio terminal (2) and an accessory device (3), whereby the mobile radio terminal (2) and the accessory device (3) are each equipped with a radio communication means (4, 5) being at least adapted for a wireless transmission of a communication signal (22) from the accessory device (3) to the mobile radio terminal (2) and whereby the mobile radio terminal (2) comprises a locking means (6), which is adapted to lock at least one function provided on the mobile radio terminal (2) upon receiving a communication signal that represents a distance information indicating that a distance between the mobile radio terminal (2) and the accessory device (3) exceeds a reference distance value or upon not receiving a communication signal indicating that the mobile radio terminal (2) and the accessory device (3) are within the reference distance from each other any more.

## Description

### TECHNICAL FIELD OF THE INVENTION

The present invention relates to an electronic equipment for wireless communication, and, in particular, to an electronic equipment with a locking mechanism that prevents the equipment from being used without proper authorisation.

### DESCRIPTION OF RELATED ART

Electronic equipment for wireless communication like e.g. portable radio communication equipment such as mobile telephones, pagers or communicators like for instance electronic organisers, smartphones, PDAs (Personal Digital Assistants) or other wireless appliances alike require a user to provide proof of his authorisation to use the equipment.

Once in operation no further authorisation is required for using the equipment. Due to its small size and its little weight modern equipment for wireless communication became a constant companion in everyday life allowing to be reached at any time desired. But the electronic equipment has to be kept in an operational status in order to enable a reception of calls or other types of electronic notification.

Having the wireless communication equipment around most of the day frequently leads to situations where it is left unattended tempting malicious people to misuse the equipment to the detriment of its owner or authorised user, respectively. The same applies to the situation where the electronic equipment for wireless communication is stolen from the user while being operative.

It is therefore an object of the present invention to prevent an unauthorised access to an electronic equipment for wireless communication being set in an operational state.

### SUMMARY

The invention is achieved by an electronic system for wireless communication, a mobile radio terminal, and an accessory device for a mobile radio terminal as set out in the appended claims.

The respective electronic system for wireless communication comprises a mobile radio terminal and an accessory device, whereby the mobile radio terminal and the accessory device are each equipped with a radio communication means being at least adapted for a wireless transmission of a communication signal from the accessory device to the mobile radio terminal, and whereby the mobile radio terminal comprises a locking means, which is adapted to lock at least one function provided on the mobile radio terminal upon receiving a communication signal that represents a distance information indicating that a distance between the mobile radio terminal and the accessory device exceeds a referenced distance value or upon not receiving a communication signal indicating that the mobile radio terminal and the accessory device are within the reference distance from each other any more.

It is to be noted that the term 'electronic system' refers to a plurality of electronic equipment, which is meant to include portable radio communication equipment. The term portable radio communication equipment is in this specification referred to as a mobile radio terminal. It includes all equipment such as mobile telephones, pagers, communicators, i.e. electronic organisers, smartphones or the like. The term 'accessory device' refers to an electronic equipment forming a separate but supplementary component for another electronic equipment adapted to extend the capability of the respective other electronic equipment.

It should further be emphasised that the terms 'comprises' and 'comprising' when used in this specification are taken to specify the presence of stated features, integers, steps or components, but do not preclude the presence or addition of one or more other features, integers, steps, components or groups thereof.

The above object is further achieved by a mobile radio terminal having a radio communication means enabling at least a reception of a communication signal from an accessory device and a locking means, which is adapted to lock at least one function provided on the mobile radio terminal upon the radio communication means receiving a communication signal that represents a distance information indicating that a distance between the mobile radio terminal and the accessory device exceeds a reference distance value or upon not receiving a communication signal indicating that the mobile radio terminal and the accessory device are within the reference distance from each other any more.

The above object is still further achieved by an accessory device for use with a mobile radio terminal, whereby the accessory device comprises a radio communication means that enables a transmission of a communication signal that is adapted to provide a distance information when received on the mobile radio terminal such, that the distance information indicates a distance between the mobile radio terminal and the accessory device.

The present invention provides an automatic security system for a mobile radio terminal thereby taking some of the responsibility off a user when she or he is not in the position to look after the appliance continually. The security locking mechanism will be activated as soon as the distance between the mobile radio terminal and a user carrying the accessory device exceeds a certain value or is disturbed. By limiting the locking mechanism to one or more functions provided on the mobile radio terminal, it is left up to the user to decide how far the safety measures are meant to go. Preferably, the mobile radio terminal is not locked completely, but allows incoming calls so that the user can attend a call when the mobile radio terminal is within earshot. This will also provide a chance to contact a finder or even a thief of the equipment and to negotiate its return.

Further developments are set forth in the dependent claims.

The locking means is conveniently adapted to unlock the at least one function provided on the mobile radio terminal upon the distance information being related to a distance between the mobile radio terminal and the accessory device that is shorter than the reference distance value, so that a user is not bothered with unlocking when getting hold of the mobile radio terminal again.

The mobile radio terminal and/or the accessory device advantageously comprise a user input means that is adapted for an input of the referenced distance value by a user. The user can thus adapt the reference distance value to his present requirement. When the user for instance stays just at home or in the office, the reference distance value will cover his or hers usual activity area, but when being en route, the reference distance value will probably be set to a very short distance for preventing any misuse.

The electronic system for wireless communication is preferably equipped with a distance assessment means for assessing the distance information based on the signal strength of the communication signal when received by the mobile radio terminal. This allows to activate the locking mechanism, i.e. the locking of the desired functions on the mobile radio terminal even when the transmission of the communication signal is troubled.

The distance assessment means may further be implemented comprising a distance-meter using a transponder target adapted to respond to a probing signal, thus allowing a direct determination of the distance between the mobile radio terminal and the accessory device. The distance-meter is suitably formed by a Frequency Modulated Continuous Wave (FMCW) distance-meter enabling a distance measurement based on the radar principle. The transponder target is preferably located on the accessory device and the radio communication means of the mobile radio terminal is adapted to transmit the probing signal. This arrangement allows to construct an accessory device of very small size.

The radio communication is preferably formed by a short range wireless communication system, which covers about the range to which a user will be able to pay attention to his mobile radio terminal. To reduce the costs when a transmission of a communication signal having coded information is to be enabled, the short range wireless communication system is advantageously based on an established communication standard like the Bluetooth standard.

In a preferred embodiment of the present invention, the electronic system is provided with a locating means comprising a location request means that is adapted for transmitting a location request signal, and a location response means that is adapted to generate an acoustic signal in response to a reception of the location request signal. This allows a user to search his missing phone when its out of sight by e.g. pressing a button on the accessory device.

The mobile radio terminal as a component of the electronic system preferably comprises a user input means for a userinput of the reference value allowing a user to set the reference setting on the mobile radio terminal in correspondence to his or her current requirement. The mobile radio may further comprise a distance assessment means and a location response means described above with respect to the electronic system.

For enabling a user to set the reference distance value on the accessory device, a user input means is provided on the accessory device. The accessory device is advantageously equipped with a signal output power control for controlling the power of the communication signal emitted from the radio communication means according to a predetermined reference value. In a preferred embodiment, a transponder target forming a component of a distance-meter according to what is described above with respect to the electronic system for wireless communication is provided on the accessory device. The accessory device may further advantageously be equipped with a location request means also described above with respect to the electronic system.

### BRIEF DESCRIPTION OF THE DRAWINGS

In the following description, the present invention is explained in more detail with respect to special embodiments and in relation to the enclosed drawings in which
- Fig. 1: shows a block diagram of an electronic system according to the present invention,
- Fig. 2a: shows the frequency modulated continuous wave probing signal together with the return signal of a transponder target as used for distance metering according to an embodiment of the present invention, and
- Fig. 2b: shows the spectrum obtained by mixing the frequency modulated continuous wave probing signal with the return signal.

### DETAILED DESCRIPTION OF EMBODIMENT

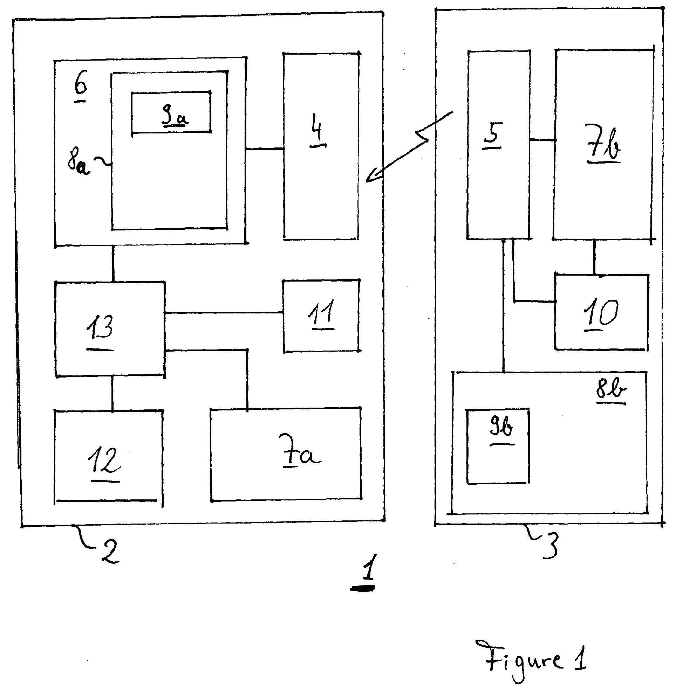

An electronic system for wireless communication 1 according to the present invention is shown in form of a block diagram in Fig. 1. The electronic system 1 is composed of two individual components, a mobile radio terminal 2 like e.g. a mobile telephone, and an accessory device 3. It is to be noted that only those elements are shown in Fig. 1, which are essential for the understanding of the present invention. Further elements such as e.g. coding means, modulation means and the like which are also necessary for the operation of the electronic system 1 are not detailed for the sake of clarity. On the side of the mobile radio terminal 2 an auxiliary means 13 is shown that is meant to represent these further necessary elements in their totality.

The mobile radio terminal shown in Fig. 1 is equipped with a radio communication means 4 adapted to receive a communication signal transmitted from the accessory device 3. The communication signal carries or implicitly contains a distance information, that is related to a distance between the mobile radio terminal and the accessory device. The communication signal may hereby contain the distance information directly by means of modulated or coded information or indirectly by means of one or more of its physical parameters like for instance its signal strength.

The transmission of the communication signal is either implemented continuously or intermittently, e.g. when using a transmission based on the Bluetooth standard. When being transmitted intermittently, the transmission may take place on regular intervals, irregular intervals or at intervals, which vary irregularly around a regular mean value. For providing a maximum amount of security against any misuse of the mobile radio terminal, the maximum time period allowed between two consecutive transmissions of an intermittently emitted communication signal is set to a value short enough to prevent any evil-minded person from using the appliance to a user's disadvantage.

The communication signal received by the radio communication means 4 is processed in a locking means 6 to isolate the distance information contained therein. The thus obtained distance information is then checked against a referenced distance value. Upon the distance information corresponding to a distance between the mobile radio terminal and the accessory device exceeding the reference distance value, the locking means 6 locks one or more or all functions on the radio terminal. To prevent any unauthorised misuse of the mobile radio terminal, the locking mechanism preferably disables any access to so-called critical functions that allow to make a call, send data or provide access to personal data stored on the mobile radio terminal.

In an alternative or additional embodiment, the functions are locked when the radio communication means 4 does not receive a communication signal. Upon a user's preference, the mobile radio terminal may even be turned off completely in this case. A communication signal is deemed to be not received when its signal strength is too low for being detected as well as when the distance information can not be isolated from the signal successfully. An intermittently transmitted communication signal will be treated as not being received when the distance information is not obtained from a communication signal for a span of time that exceeds the maximum period allowed between two consecutive communication signal transmissions. Hereby, some extra time may be conceded to avoid an oscillatory behaviour when the mobile radio terminal is located close to the area covered by the communication signal.

In the case of functions on the mobile radio terminal 2 being locked in response to a negative assessment of the distance between the mobile radio terminal and the accessory device 3 being within the one defined by the reference distance value, these functions are preferably unlocked again by the locking means 6 as soon as the distance information is found to relate to a distance between the mobile radio terminal 2 and the accessory device 3 falling short or being below the reference distance.

The reference distance within which a user deems his mobile radio terminal to be in no danger of possible misuse, i.e. unauthorised use, depends on the preferences of the user combined with the current situation. While being on a train, the user's security requirement will probably be more strict than when the user stays at home or is in his or her office. To enable a user to adapt the reference distance value to a current situation or environment she or he is in, either the mobile radio terminal 2 or the accessory device 3 is equipped with a user input means like e.g. a key pad, a toggle switch or the like means for to input a new or for to change a currently valid reference distance value.

The distance information corresponding to a distance between the mobile radio terminal 2 and the accessory device 3 can be obtained from the received communication signal in different ways. In the most simple case, the distance information is implicitly given by the signal strength of the communication signal when received by the mobile radio terminal 2. As soon as the signal strength differs in a specified manner from a value related to the reference distance value, the previously determined critical functions of the mobile radio terminal are locked.

In one embodiment of the distance determination, the output power of the communication signal transmitted from the radio communication means 5 on the accessory device 3 is controlled to have a defined value. The signal strength of the communication signal when received in the mobile radio terminal 2 then forms a relatively reliable measure for the distance between the mobile radio terminal 2 and the accessory device 3. The distance is assessed by the distance assessment means 8a located on the mobile radio terminal 2 usually formed as part of the locking means 6. In the distance assessment means 8a the obtained distance value is at least compared to the currently valid reference distance value.

When setting a reference distance value e.g. by means of the user input means 7a on the mobile radio terminal 2, a user will probably not be bothered with converting distance values in signal strength values himself. The distance assessment means 8a is therefore adapted to convert a user input for the reference distance value given in a length unit like e.g. metres into a respective signal strength value representing the distance set by the user. As soon as the strength of the received communication signal indicates a distance above the set reference or when no communication signal is received, the locking mechanism provided by the locking means 6 is enabled. A note informing about the locking state may then be shown on the display 12 of the mobile radio terminal 2.

In an alternative embodiment, the accessory device 3 is adapted to enable a setting of the distance reference thereon, whereby the set value may be communicated to the mobile radio terminal or the emission power of the communication signal will be controlled in accordance to the set value, which allows to use a constant threshold value on the mobile side for determining if the set distance is exceeded or not.

Instead of transmitting the communication signal directly to the mobile radio terminal, the accessory device may be adapted to communicate with a base station of a cellular mobile telephone network instructing the base station to set the signal strength of the downlink to a certain value. On the mobile radio terminal, the downlink signal strength is then used to determine if it is to be set in safe mode, i.e. to lock the specified functions or turn itself off completely. In this case, a safe mode will be triggered by the downlink signal being stronger as well as being weaker than the value set by the accessory device, since the distance between the mobile radio terminal will increase for it being closer to as well as for it being farther from the base station than the accessory device.

The distance evaluation may also be based on the Global Positioning System (GPS) such that the distance between the mobile radio terminal 2 and the accessory device 3 is calculated from the position data obtained for each of the to two appliances. The accessory device 3 hereby preferably communicates its position data to the mobile radio terminal 2 whereon these data are compared to the position data obtained for the mobile 2 to determine the relative distance between the two devices. If available, also indoor positioning systems may accordingly be used for this purpose.

In a further embodiment, the distance between the mobile radio terminal 2 and the accessory device 3 is determined by a direct measurement like for instance with a distance-meter employing a transponder target adapted to respond to a probing signal. The transmitter for the probing signal is located on another device than the transponder target, i.e. if the probing signal transmitter is on the mobile radio terminal, the transponder will be on the accessory device 3. For the distance measurement a modulated probing signal is sent out from the probing transmitter to the transponder target. The latter processes the received signal and sends it back to the probing transmitter where the distance can be calculated on the basis of the time required for the round trip of the signal exchange.

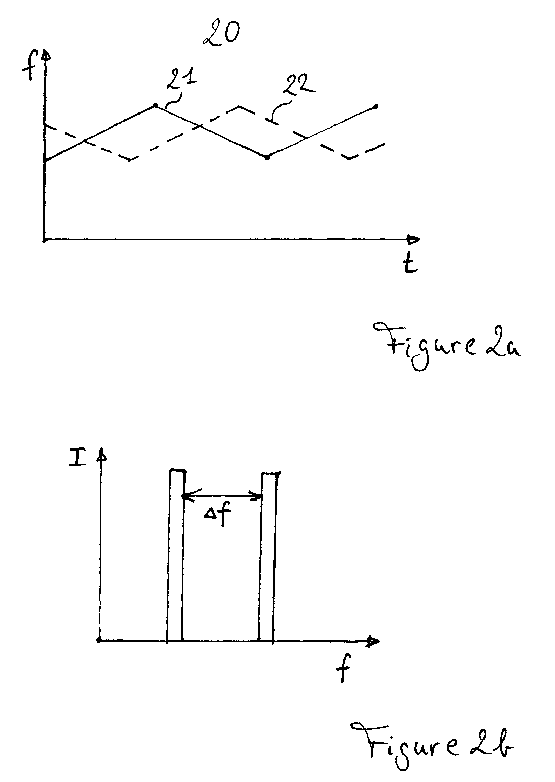

For an easy integration of a respective distance-meter in the electronic system 1, a Frequency Modulated Continuous Wave (FMCW) distance-meter is preferably used. The FMCW distance-meter operation is based on the radar principle. Referring to Fig. 2a, a radio frequency modulated continuous wave radio frequency signal 21 is transmitted from the probing transmitter on the first device, preferably the mobile radio terminal 2, to an active transponder target preferably located on the accessory device 3. The received RF-signal is then amplified and modulated on the transponder target before being retransmitted in form of a return signal 22. On the first device, the primary RF-probing signal 21 is mixed with the return signal 22 resulting a spectrum shown in Fig. 2b. The spectrum shows two peaks that are separated in frequency. The frequency separation Δf between the two peaks is directly related to the distance between the first device and the transponder target.

As a transponder target is capable of utilising RF-energy for its power requirements, no extra power supply is needed for it. Placing the transponder target on the accessory device 3 will therefore enable a small-size construction allowing to integrate the accessory device unobtrusively e.g. in a costume jewellery. The active components of the FMCW distance-meter, which require an external power supply are then placed on the mobile radio terminal 2.

To achieve a low power consumption for the distance controlled locking mechanism described above, the radio communication means 4 and 5 used for the reception and transmission of the communication signal are preferably implemented as a short-range wireless communication system. Such a system enables a reasonable limitation of the maximum reference distance value to around 10 to 30 metres, which corresponds roughly to the distance beyond which a displaced mobile radio terminal is likely to escape a user's attention.

To avoid a wrong distance determination by evaluating a wrong communication signal, i.e. a communication signal originating from an accessory device that is not dedicated to the respective mobile radio terminal 2, the communication signal is preferably provided with a code for identifying the accessory device sending it. A corresponding data exchange is hereby preferably implemented by a short-range wireless communication system based on the Bluetooth standard.

As it frequently happens that a user misplaces his mobile radio terminal and is then unable to find it again, a further embodiment of the electronic system 1 provides a locating means for enabling a user to find his missing mobile. Basically, the locating means is built of two components, the location request means 10 and the location response means 11. The first component is located on the accessory device 3 and causes the radio communication means 5 to broadcast a location request signal upon being activated by a user via user input means 7b. The user input means 7b may provide a particular button hereto, but may also assist the user by a menu structure presented on a display for the accessory device 3. The mobile radio terminal 2 is correspondingly equipped with a location response means that starts the generation of an acoustic signal through a loudspeaker on the mobile radio terminal in response to a reception of the location request signal.

## Claims

1. An electronic system (1) for wireless communication comprising a mobile radio terminal (2) and an accessory device (3), whereby the mobile radio terminal (2) and the accessory device (3) are each equipped with a radio communication means (4, 5) being at least adapted for a wireless transmission of a communication signal (22) from the accessory device to the mobile radio terminal,
**characterised in**
**that** the mobile radio terminal (2) comprises a locking means (6), which is adapted to lock at least one function provided on the mobile radio terminal (2) upon receiving a communication signal that represents a distance information indicating that a distance between the mobile radio terminal (2) and the accessory device (3) exceeds a reference distance value or upon not receiving a communication signal indicating that the mobile radio terminal (2) and the accessory device (3) are within the reference distance from each other any more.

2. An electronic system according to claim 1,
**characterised in**
**that** the locking means (6) is further adapted to unlock the at least one function upon the distance information represented by the received communication signal indicating that a distance between the mobile radio terminal (2) and the accessory device (3) is shorter than the reference distance value.

3. An electronic system according to claim 1 or 2,
**characterised in**
**that** the mobile radio terminal (2) and/or the accessory device (3) comprise a user input means (7a, 7b) adapted for a userinput of the reference distance value.

4. An electronic system according to claim 1, 2 or 3,
**characterised by**
a distance assessment means (8a, 8b) for assessing the distance information based on the signal strength of the communication signal when received by the mobile radio terminal (2).

5. An electronic system according to claim 4,
**characterised in**
**that** the distance assessment means (8a, 8b) further comprises a distance-meter (9a, 9b) using a transponder target adapted to respond to a probing signal.

6. An electronic system according to claim 5,
**characterised in**
**that** the distance-meter (9a, 9b) is formed by a Frequency Modulated Continous Wave Distance Meter.

7. An electronic system according to claim 5 or 6,
**characterised in**
**that** the transponder target is located on the accessory device (3) and the radio communication means (4) of the mobile radio terminal (2) is adapted to transmit the probing signal.

8. An electronic system according to one of the claims 1 to 7,
**characterised in**
**that** the radio communication means (4, 5) is formed by a short range wireless communication system.

9. An electronic system according to claim 8,
**characterised in**
**that** the short range wireless communication system is based on the Bluetooth standard.

10. An electronic system according to one of the claims 1 to 9,
**characterised by**
a locating means comprising a location request means (10) adapted for a transmission of a location request signal and a location response means (11) adapted to generate an acoustical signal in response to a reception of the location request signal.

11. A mobile radio terminal having a radio communication means (4) enabling at least a reception of a communication signal from an accessory device,
**characterised by**
a locking means (6),which is adapted to lock at least one function provided in the mobile radio terminal (2) upon the radio communication means (4) receiving a communication signal that represents a distance information indicating that a distance between the mobile radio terminal (2) and the accessory device (3) exceeds a reference distance value or upon not receiving a communication signal indicating that the mobile radio terminal (2) and the accessory device (3) are within the reference distance from each other any more.

12. A mobile radio terminal according to claim 11,
**characterised by** user input means (7a) adapted for a userinput of the reference distance value.

13. A mobile radio terminal according to claim 11 or 12,
**characterised by** a distance assessment means (8a) according to one of the claims 4 to 7.

14. A mobile radio terminal according to claim 11, 12 or 13,
**characterised by** a location response means (11) according to claim 10.

15. An accessory device for use with a mobile radio terminal, the accessory device (3) having a radio communication means (5) enabling a transmission of a communication signal that is adapted to provide a distance information when received on the mobile radio terminal (2) such that the distance information indicates a distance between the mobile radio terminal (2) and the accessory device (3).

16. An accessory device according to claim 15,
**characterised by**
a user input means (7b) adapted for an input of a reference distance value by a user.

17. An accessory device according to claim 15 or 16,
**characterised by**
a signal output power control for controlling the power of the communication signal emitted from the radio communication means (5) according to a predetermined reference value.

18. An accessory device according to one of the claims 15 to 17,
**characterised by**
a transponder target (9b) forming a component of a distance-meter (9a, 9b) according to one of the claims 5 to 7.

19. An accessory device according to one of the claims 15 to 18,
**characterised by**
a location request means (10) according to claim 10.
